# EUROPÄISCHE PATENTSCHRIFT

(11) **EP 1 170 903 B1**
(45) Veröffentlichungstag und Bekanntmachung des Hinweises auf die Patenterteilung: **04.01.2006**
(21) Anmeldenummer: 01115437.4
(22) Anmeldetag: 27.06.2001
(51) Int. Cl.: H04L 12/413, G06F 11/00, G01R 29/027, B60R 16/02, H04L 12/26

(54) **Buswächtereinheit für einen Netzknoten eines zeitgetriggerten Datenkommunikationsnetzes**
Bus monitoring unit for a network node within a time triggered data communication network
Surveillance de bus pour un noeud de réseau d'un réseau de communication de données déclencheur par temp

(30) Priorität: 07.07.2000 DE 10032597
(43) Veröffentlichungstag der Anmeldung: 09.01.2002
(73) Patentinhaber: DaimlerChrysler AG, 70567 Stuttgart (DE); Bayerische Motoren Werke Aktiengesellschaft, 80788 München (DE)
(72) Erfinder: Belschner, Ralf, Dr., 72124 Pliezhausen (DE); Hedenetz, Bernd, 73770 Denkendorf (DE); Minuth, Jürgen, 73079 Sussen (DE); Berwanger, Josef, 85586 Poing (DE); Ebner, Christian, 80807 München (DE); Krammer, Josef, 83607 Holkirchen (DE); Peller, Martin, 80796 München (DE); Schedl, Anton, Dr., 80798 München (DE)

(56) Entgegenhaltungen:
- DE-A- 3 640 351
- FR-A- 2 657 737
- US-A- 3 568 071
- US-A- 3 970 944
- HILL T ET AL: "MIKROCOMPUTER IN KFZ-ANWENDUNGEN" ELEKTRONIK, FRANZIS VERLAG GMBH. MUNCHEN, DE, Bd. 38, Nr. 4, 17. Februar 1989 (1989-02-17), Seiten 48-51,54-56, XP000212715 ISSN: 0013-5658
- POLEDNA S ET AL: "TTP: DRIVE BY WIRE IN GREIFBARER NAEHE ECHTZEIT-KOMMUNIKATION IM AUTOMOBIL MIT ZEITGESTEUERTEM PROTOKOLL ERLAUBT HOCHZUVERLAESSIGE ANWENDUNGEN" ELEKTRONIK, FRANZIS VERLAG GMBH. MUNCHEN, DE, Bd. 48, Nr. 14, 13. Juli 1999 (1999-07-13), Seiten 36-38,40,42-43, XP000913186 ISSN: 0013-5658
- TEMPLE C.: 'AVOIDING THE BABBLING IDIOT FAILURE IN A TIME-TRIGGERED COMMUNICATION SYSTEM' 28TH ANNUAL INTERNATIONAL SYMPOSIUM ON FAULT-TOLERANT COMPUTING , FTCS-28 23 Juni 1998 - 25 Juni 1998, MONCHEN, Seiten 218 - 227

## Beschreibung

Die Erfindung betrifft eine Buswächtereinheit für einen Netzknoten eines zeitgetriggerten Datenkommunikationsnetzes, die eine Watchdog-Einheit aufweist,'welche das Auftreten von Signalen während einer Zeitdauer überwacht, und die Mittel zur Bereitstellung eines Signals zum Freigeben von Sendevorgängen des zugehörigen Netzknotens innerhalb eines jeweiligen Netzzugriffszyklus gemäß einem vorgegebenen Freigabesignalmuster umfasst.

Eine Buswächtereinheit dieser Art, auch "Bus Guardian" genannt, ist in dem Konferenzbeitrag C. Temple, Avoiding the Babbling-Idiot Failure in a Time-Triggered Communication System, FTCS-28, München 1998 beschrieben. Die dortige Buswächtereinheit bildet neben einem Verarbeitungs- bzw. Prozessorsystem, das auch als Kommunikationssteuereinheit oder Kommunikationscontroller fungiert, und einer Treiberstufe, über die das Prozessorsystem an einen die Netzknoten koppelnden Datenbus angekoppelt ist, eine eigenständige Einheit. Das Prozessorsystem umfasst einen oder mehrere Prozessoreinheiten, ein statisches TDMA-Schema, eine synchronisierte Zeitbasis, einen Sendeempfänger und einen Fehlerdetektionsmechanismus. Die Buswächtereinheit empfängt vom Prozessorsystem ein Auslöse- bzw. Triggersignal, das den Beginn eines jeweiligen Buszugriffszyklus triggert, sowie ein Sendeausführungssignal ("transmission-inprogress-Signal"), das die Dauer eines jeweiligen Sendevorgangs anzeigt und dazu dient, innerhalb der Buswächtereinheit ein rudimentäres Fehlerdetektionsschema zu implementieren, indem anhand dieses Signals festgestellt wird, ob ein Sendevorgang den Buszugriffszyklus verletzt. Im Fehlerfall gibt die Buswächtereinheit ein Fehlersignal an das Prozessorsystem ab. Das Triggersignal dient gleichzeitig zur Synchronisation der eigenen, z.B. von einem Quarzoszillator gelieferten Zeitbasis der Buswächtereinheit mit derjenigen des Prozessorsystems. Während eines jeden Buszugriffszyklus gibt die Buswächtereinheit ein Bustreiber-Freigabesignal gemäß einem abgelegten Freigabesignalmuster an die Treiberstufe ab, wobei das Freigabesignalmuster so gewählt ist, dass es den Buszugriff zum Senden einer einzelnen Botschaft durch das zugehörige Prozessorsystem zum Datenbus zu einem bestimmten Zeitpunkt während eines Sendezeitfensters ermöglicht, dessen Länge derjenigen einer Einzelbotschaft entspricht. Dem Sendezeitfenster ist innerhalb des Buszugriffzyklus eine Vorphase vorgeschaltet und eine Nachphase nachgeschaltet, während denen der Buszugriff jeweils gesperrt bleibt.

In dem Zeitschriftenaufsatz S. Poledna und G. Kroiss, TTP: "Drive by Wire" in greifbarer Nähe, Elektronik 14/1999, Seite 36 ist eine Buswächtereinheit für ein TTP/C-Datenkommunikationsnetz beschrieben, wie es insbesondere in Kraftfahrzeugen verwendet wird, wobei dort die Buswächtereinheit in die Kommunikationssteuereinheit des Netzknotens integriert ist. Die dortige Buswächtereinheit verwendet keine eigene Zeitbasis, sondern diejenige der Kommunikationssteuereinheit, und soll mit einer eigenen Takterzeugung in der TTP/C-Kommunikationssteuereinheit dafür sorgen, dass der Netzknoten nur im jeweils richtigen Zeitfenster bzw. Zeitschlitz auf den Bus zugreifen kann. Eine Schwierigkeit solcher Buswächtereinheiten besteht darin, dass im Fall eines Fehlers der Kommunikationssteuereinheit und insbesondere von deren Zeittakterzeugungsmitteln unter Umständen fehlerhafte Zugriffe auf den Bus erfolgen.

In C. Temple: "Avoiding the babbling idiot failure in a time-triggered communication system", 28 annual int. Symposium on fault-tolerant computing, FTCS-28, München, 23. Juni 1998-25, Seite 218-227 ist eine Buswächtereinheit für eine zeitgetriggertes Datenkommunikationssystem offenbart. Eine zusätzliche Watchdog-Einheit zur Überwachung der Buswächtereinheit ist nicht offenbart.

Die DE 4132139 C2 und Hill et al: "Mikrocomputer in KFZ-Anwendungen" in der Zeitschrift Elektronik, Band 38, Nr.4 vom 17. Februar 1989, Seiten 48-56, zeigen einen Watchdog, wie dieser bei einzelnen Steuergeräten eingesetzt wird, um die ordnungsgemäße Ausführung von Software-Programmen u.ä. zu überwachen. Dieser Watchdog ist jedoch nicht mit einer Buswächtereinheit kombiniert, um den Bus freizugeben, wenn ein defekter Kommunikationsbaustein diesen für alle Busteilnehmer belegt.

Die DE 3726742 A1 zeigt bereits eine Buswächtereinheit, die den Buszugriff unterbindet, wenn nach einer Zeitdauer, die durch das Aufladen eines Kondenstors vorgegeben wird, ein Sendesignal auf dem Bus vorliegt. Die Zeiterfassung erfolgt dabei durch den Kondensator, der das Ende eines Sendezyklus vorgibt. Der Buszugriff durch das Sendemittel eines Netzknotens wird unterbrochen, wenn nach der Zeitdauer weitergesendet wird.

Der Erfindung liegt als technisches Problem die Bereitstellung einer Buswächtereinheit der eingangs genannten Art zugrunde, die gegenüber herkömmlichen Buswächtereinheiten verbesserte Funktionalitäten aufweist, insbesondere was die Einhaltung der vorgegebenen Länge der Netzzugriffszyklen und/oder die Sendezugriffsrechte während eines jeweiligen Netzzugriffszyklus betrifft.

Die Erfindung löst dieses Problem durch die Bereitstellung einer Buswächtereinheit mit den Merkmalen des Anspruchs 1.

Die Buswächtereinheit nach Anspruch 1 beinhaltet eine Watchdog-Einheit zur Überwachung des Zeitabstands zwischen je zwei Triggerimpulsen, die Anfang und Ende eines jeweiligen Netzzugriffszyklus bestimmen. Wenn dieser Zeitabstand nicht innerhalb eines durch einen unteren und einen oberen Grenzwert vorgegebenen "Triggerjitter"-Toleranzbereiches liegt, sperrt die Watchdog-Einheit temporär den Netzzugriff für den zugehörigen Netzknoten. Damit werden einerseits geringfügige zeitliche Schwankungen im Zeitabstand der Triggerimpulse, die Anfang bzw. Ende eines jeweiligen Netzzugriffszyklus bestimmen, noch toleriert, während andererseits zu starke Abweichungen von der Watchdog-Einheit erkannt werden und letztere daraufhin das Senden kollidierender Botschaften temporör verhindert. Solche signifikanten Abweichungen des Triggersignalabstands von einem Sollwert können z.B. durch eine Fehlfunktion des Kommunikationscontrollers insbesondere in dessen Systemteil, der die Zeitbasis bereitstellt und das darauf basierende Triggersignal erzeugt, verursacht sein. Da die Buswächtereinheit und damit auch deren Watchdog-Einheit eine eigene Zeitbasis benutzt, ist es letzterer möglich, fehlerhafte Abweichungen des ihr zugeführten, auf der Zeitbasis des Kommunikationscontrollers basierenden Triggersignals zu erkennen.

In einer Weiterbildung der Buswächtereinheit nach Anspruch 2 fungiert das Triggersignal gleichzeitig als Synchronisationssignal zum Synchronisieren der Zeitbasis der Buswächtereinheit mit der Zeitbasis, auf der das Triggersignal basiert. Das empfangene Triggersignal kann außerdem gleichzeitig zur Synchronisierung der eigenen Zeitbasis der Buswächtereinheit dienen, so dass die Synchronität mit der Zeitbasis der triggersignalerzeugenden Einheit aufrechterhalten werden kann. Und dies ohne hierfür ein eigenes Synchronisierungssignal zu benötigen. Die triggersignalerzeugenden Einheit ist bevorzugt ein Kommunikationscontroller des Netzknotens.

Bei einer Weiterbildung der Buswächtereinheit ist ein charakteristisches Freigabesignalmuster für das Freigabesignal vorgesehen, und zwar dergestalt, dass es pro Netzzugriffszyklus mehrere separate Einzelnutzungs-Freigabetakte, während denen jeweils eine einzelne Botschaft vom zugehörigen Netzknoten gesendet werden kann, und/oder wenigstens einen Mehrfachnutzungs-Freigabetakt beinhaltet, dessen zeitliche Länge ein Mehrfaches der für das Senden einer Einzelbotschaft erforderlichen Zeitdauer beträgt. Der Mehrfachnutzungs-Freigäbetakt stellt somit ein beliebig nutzbares Zeitfenster dar, für das zur Systemlaufzeit entschieden werden kann, welcher Netzknoten senden kann. Zur Kollisionsvermeidung während dieser mehrfach nutzbaren Zeiträume können übliche Arbitrierungsmethoden dienen. Die Möglichkeit, pro Netzzugriffszyklus mehrere Einzelbotschaften durch den jeweils zugehörigen Netzknoten zu erlauben und/oder einen vom Mehrfachnutzungs-Freigabetakt repräsentierten Teil des Netzzugriffszyklus für beliebige, zur Systemlaufzeit entscheidbare Netzknoten-Sendevorgänge nutzen zu können, erhöht die Flexibilität und erweitert die Anwendungsmöglichkeiten des Datenkommunikationsnetzes.

In einer Weiterbildung der Erfindung nach Anspruch 4 beinhaltet die Buswächtereinheit eine Diagnoseeinheit, mit der die Funktion der Buswächtereinheit und/oder einer vom Freigabesignalmuster gesteuerten Sendetreibereinheit diagnostiziert werden kann.

Eine nach Anspruch 5 weitergebildete Buswächtereinheit beinhaltet zusätzlich eine Zugriffsabsicherungseinheit, die sicherstellt, dass Betriebsparameter korrekt eingelesen werden, insbesondere ein jeweils gewünschtes, in einen Zeitmusterspeicher einzulesendes Zeitmuster des Freigabesignals.

Eine vorteilhafte Ausführungsform der Erfindung ist in den Zeichnungen dargestellt und wird nachfolgend beschrieben. Hierbei zeigen:
- Fig. 1: ein Blockdiagramm einer Buswächtereinheit und einer zugeordneten Treiberstufe eines Netzknotens eines Datenkommunikationsnetzes,
- Fig. 2: Diagramme zur Veranschaulichung der Funktionsweise der Buswächtereinheit während eines jeweiligen Netzzugriffszyklus und
- Fig. 3: Diagramme zur Veranschaulichung einer von der Buswächtereinheit erkannten Fehlfunktion.

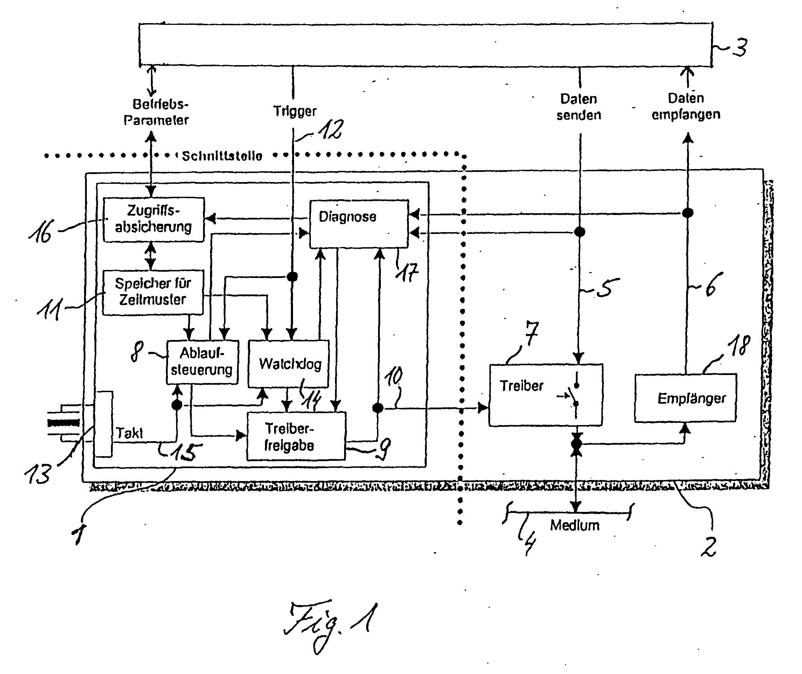

Fig. 1 zeigt eine Buswächtereinheit 1, die als eigenständige Einheit auf Höhe einer Bustreibereinheit 2 zwischen einem Kommunikationscontroller 3 und einem Kommunikationsmedium 4, wie einem Datenbus, angeordnet ist, wobei über das Kommunikationsmedium 4 in üblicher Weise mehrere Netzknoten eines entsprechenden Datenkommunikationsnetzes miteinander in Datenaustauschverbindung stehen. Die Buswächtereinheit 1 ist über eine entsprechende Schnittstellenebene, wie in Fig. 1 punktiert symbolisiert, mit der "Außenwelt" verbunden, insbesondere mit dem Kommunikationscontroller 3, einer vom Kommunikationscontroller 3 zum Kommunikationsmedium 4 führenden Sendeverbindung 5, einer vom Kommunikationsmedium 4 zum Kommunikationscontroller 3 führenden Empfangsverbindung 6, in welcher sich eine zugehörige Empfängereinheit 18 befindet, und einer in der Sendeverbindung 5 angeordneten Sendetreibereinheit 7.

Vom Netzknoten auf das Kommunikationsmedium 4 auszugebende Daten werden vom Kommunikationscontroller 3 in einer herkömmlichen Weise aufbereitet und der Sendetreibereinheit 7 zugeführt, die sie zeitgetriggert als Datenpaket-Botschaften innerhalb von Zeitfenstern auf den Datenbus 4 gibt, wenn und soweit die Sendetreibereinheit 7 hierfür von der Buswächtereinheit 1 freigegeben wird.

Zur zeitgetriggerten Steuerung der Sendetreibereinheit 7 beinhaltet die Buswächtereinheit 1 eine Ablaufsteuerungseinheit 8, der eine Treiberfreigabeeinheit 9 nachgeschaltet ist, die ein Treiberfreigabesignal 10 erzeugt, das als Ansteuersignal für die Sendetreibereinheit 7 dient. Das Treiberfreigabesignal 10 definiert gewisse Zeitfenster innerhalb eines jeweiligen Netzzugriffszyklus, während denen die Sendetreibereinheit 7 aktiviert wird, so dass sie das Senden von Daten vom Kommunikationscontroller 3 auf das Kommunikationsmedium 4 zulässt, während sie ansonsten derartige Sendevorgänge nicht unterstützt, d.h. den Netzzugriff für den Kommunikationscontroller 3 auf das Kommunikationsmedium 4 sperrt. Lage und Dauer der Zeitfenster sind durch ein entsprechendes Freigabesignal-Zeitmuster definiert, das in einem zugehörigen Zeitmusterspeicher 11 der Buswächtereinheit 1 abgelegt ist.

Zur Festlegung eines jeweiligen Netzzugriffszyklus empfängt die Buswächtereinheit 1 ein Triggersignal 12 vom Kommunikationscontroller 3, welches in diesem Beispiel einen Triggerimpuls beinhaltet, der den Anfang eines jeweiligen Netzzugriffszyklus und gleichzeitig das Ende des vorherigen Netzzugriffszyklus definiert. Durch das Triggersignal 12 erhält die Ablaufsteuerung 8 somit vom Kommunikationscontroller 3 die Information über Beginn und Ende des jeweiligen Netzzugriffszyklus. Sie steuert darauf zeitlich abgestimmt die Treiberfreigabeeinheit 9 zur Abgabe des Treiberfreigabesignals 10 an, wobei sie ein Taktsignal 15 benutzt, das von einem eigens für die Buswächtereinheit 1 vorgesehenen Zeittaktgenerator 13 erzeugt wird, durch den somit der Buswächtereinheit 1 eine eigene Zeitbasis getrennt von derjenigen des Kommunikationscontrollers 3 bereitgestellt wird. Die Synchronisation der beiden Zeitbasen erfolgt mit Hilfe des Triggersignals 12, so dass kein zusätzliches Synchronisationssignal notwendig ist.

Die Buswächtereinheit 1 weist des weiteren eine Watchdog-Einheit 14 auf, welche die fehlerfreie zeitliche Abstimmung der erwähnten Signale überwacht, wozu ihr das Taktsignal 15, das Triggersignal 12 und das im Zeitmusterspeicher 11 abgelegte Treiberfreigabesignalmuster zugeführt werden. Speziell überwacht die Watchdog-Einheit 14 das Triggersignal 12 daraufhin, ob die einzelnen Triggerimpulse im richtigen Abstand aufeinanderfolgen, d.h. die einzelnen Netzzugriffszyklen die richtige zeitliche Länge haben. Dabei lässt sie eine vorgebbare "Triggerjitter"-Toleranz zu, indem sie auf ein fehlerhaftes Triggersignal erst schließt, wenn der festgestellte Triggerimpulsabstand kleiner als ein vorgebbarer unterer Grenzwert oder größer als ein vorgebbarer oberer Grenzwert ist, der um die gewünschte Toleranzlänge über dem unteren Grenzwert liegt, wobei vorzugsweise der Normal- oder Sollabstand für die Triggerimpulse in der Mitte zwischen dem unteren und dem oberen Grenzwert liegt. Bei erkanntem Fehler steuert die-Watchdog-Einheit 14 die Treiberfreigabeeinheit 9 an, um die Treiberfreigabe und damit den Netzzugriff zum Senden von Daten für den betreffenden Netzknoten temporär zu sperren.

Über eine Zugriffsabsicherungseinheit 16 können die benötigten Betriebsparameterdaten in die Buswächtereinheit 1 eingelesen und aus dieser ausgelesen werden. Die Zugriffsabsicherungseinheit 16 gewährleistet hierbei das korrekte Einlesen der Betriebsparameter und dabei insbesondere auch des in den Zeitmusterspeicher 11 eingespeicherten Zeitmusters durch bekannte Verfahren der übertragungsabsicherung, wie z.B. ein Prüfsummenverfahren. Mit anderen Worten prüft die Buswächtereinheit 1 durch ihre Zugriffsabsicherungseinheit 16 eigenständig durch ein Ü-bertragungsabsicherungsverfahren und nach vorgebbaren Plausibilitätskriterien, ob das in den Zeitmusterspeicher 11 einzulesende Zeitmuster in sich schlüssig ist, d.h. plausibel und inhaltlich korrekt ist. Wenn dies nicht der Fall ist, verweigert sie die Freigabe des zugeführten Zeitmusters. Zudem verfügt die Buswächtereinheit 1 über eine Diagnoseeinheit 17, die eingangsseitig mit der Sendeverbindung 5, der Empfangsverbindung 6, der Ablaufsteuerungseinheit 8, der Treiberfreigabeeinheit 9 und der Watchdog-Einheit 14 verbunden ist und eine Funktionsdiagnose dieser Systemkomponenten ermöglicht. Wird hierbei eine Fehlfunktion diagnostiziert, kann über die Diagnoseeinheit 17 wiederum die Treiberfreigabeeinheit 9 angesteuert werden, um den Netzzugriff für den zugehörigen Netzknoten zu sperren. Im übrigen kann das Diagnoseresultat über die Zugriffsabsicherungseinheit 16 ausgelesen werden.

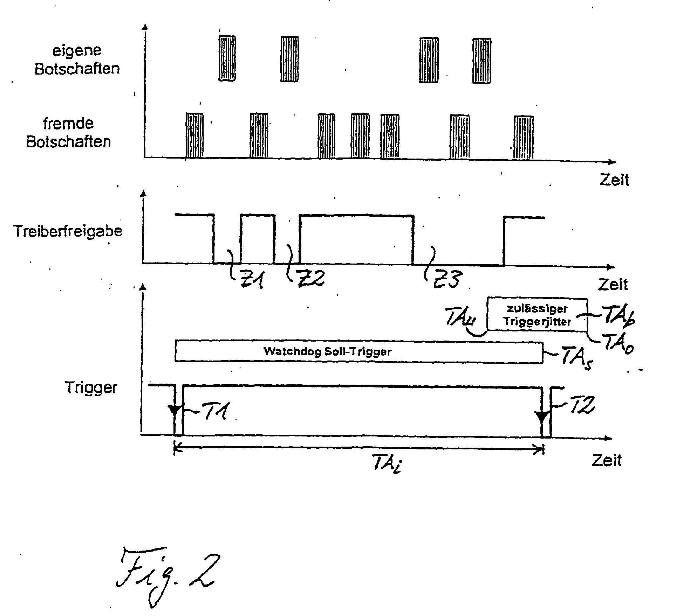

Fig. 2 veranschaulicht diagrammatisch die Funktionsweise der Buswächtereinheit 1 während eines jeweiligen Netzzugriffszyklus. Im untersten Diagramm ist das Triggersignal dargestellt, wobei ein erster Triggerimpuls T1 den Beginn eines laufenden und damit das Ende eines vorherigen und ein nächster, zweiter Triggerimpuls T2 das Ende des eines darauffolgenden Netzzugriffszyklus markieren. Die Watchdog-Einheit 14 der Buswächtereinheit 1 überwacht den Zeitabstand TAi der aufeinanderfolgenden Triggerimpulse T1, T2, wobei ein bestimmter Sollabstand TAₛ vorgegeben ist. Zusätzlich ist ein gewisser Toleranzbereich TA_{b} und damit ein zulässiger Triggerjitter vorgegeben, um den der Triggerimpulsabstand TAᵢ noch vom Sollabstand TAₛ abweichen darf, ohne dass auf einen Fehler geschlossen wird. Dieser Toleranzbereich TA_{b} ist durch einen unteren Grenzwert TAᵤ kleiner als der Sollwert TAₛ und einen oberen Grenzwert TAₒ größer als der Sollwert TAₛ gegeben.

Im mittleren Diagramm von Fig. 2 ist ein mögliches Beispiel für das von der Buswächtereinheit 1 erzeugte Treiberfreigabesignal 10 gezeigt, wobei der niedrige Signalpegel Freigabezeiträume und der hohe Signalpegel Sperrzeiträume bezeichnet. Im gezeigten Fall umfasst das Treiberfreigabesignal ein erstes Einzelbotschaft-Zeitfenster Z1, dem in einem gewissen Zeitabstand ein zweites Einzelbotschaft-Zeitfenster Z2 folgt, dem wiederum mit größerem Zeitabstand ein Mehrfachnutzungs-Zeitfenster Z3 folgt. Die Länge der ersten beiden (Einzelbotschafts-)Zeitfenster Z1, Z2 entspricht der Datenpaketlänge einer einzelnen, zu übertragenden Botschaft, während die Länge des Mehrfachnutzungs-Zeitfensters Z3 einem Mehrfachen dieser Einzelbotschaftslänge entspricht. Dies bedeutet, dass die beiden ersten Zeitfenster Z1, Z2 Einzelnutzungs-Freigabetakte des Treiberfreigabesignals darstellen, in denen der betreffende Netzknoten jeweils eine einzelne, eigene Botschaft senden kann. Das dritte, breitere Zeitfenster 23 bildet hingegen einen Mehrfächnutzungs-Freigabetakt des Treiberfreigabesignals, in welchem der betreffende Netzknoten durchgängig Sendezugriff auf das Kommunikationsmedium 4 erhält. Er kann somit zu geeigneten Zeiten innerhalb dieses Mehrfachnutzungs-Zeitfensters Z3 mehrere eigene Botschaften senden. Das Datenkommunikationsnetz entscheidet durch geeignete herkömmliche Arbitrierungsverfahren, welcher Netzknoten eines solchen Mehrfachnutzungs-Zeitfensters Z3 zu welchen Zeiträumen Botschaften senden darf, ohne dass Datenkollisionen auftreten, wobei es genügt, wenn das System diese Entscheidung zur Laufzeit trifft.

Dies trägt ebenso zu einer hohen Flexibilität des Systems bei wie die Möglichkeit, dass ein bestimmter Netzknoten innerhalb eines Netzzugriffszyklus mehrere Einzelbotschaften senden kann, wie im Beispiel von Fig. 2 durch die beiden Einzelbotschafts-Zeitfenster Z1, Z2 repräsentiert. Im Beispiel von Fig. 2 sendet der betreffende Netzknoten während des Mehrfachnutzungs-Zeitfensters Z3 zwei eigene Botschaften, zwischen denen er eine fremde Botschaft, d.h. eine Botschaft von einem anderen Netzknoten des Systems, empfängt. Im übrigen kann jeder Netzknoten fremde Botschaften zu beliebigen Zeitpunkten, zu denen er nicht sendet, unabhängig vom Treiberfreigabesignal empfangen. Beispielhafte Sendevorgänge eigener Botschaften und Empfangsvorgänge fremder Botschaften sind im oberen Diagramm von Fig. 2 illustriert.

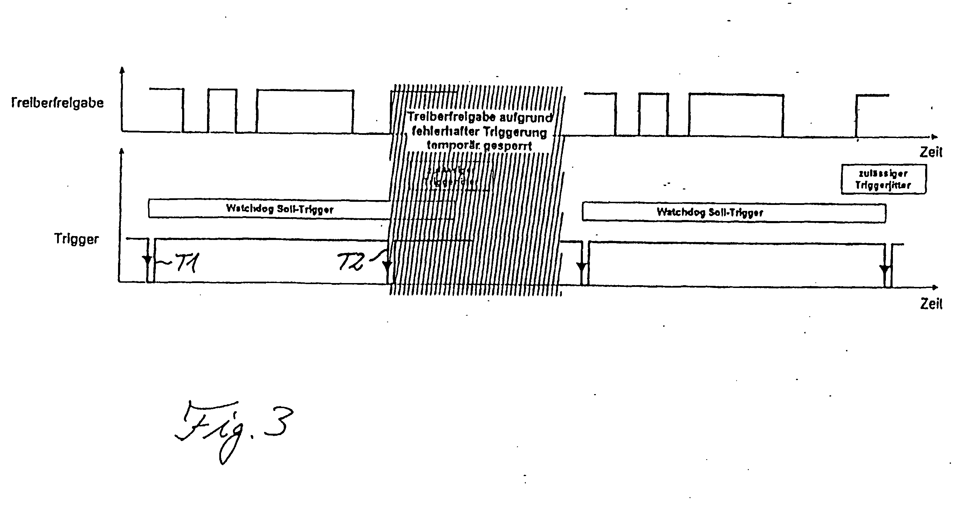

Figur 3 veranschaulicht diagrammatisch die Funktion der Buswächtereinheit 1 und insbesondere von deren Watchdog-Einheit 14 bei als fehlerhaft erkanntem, empfangenem Triggersignal. Im gezeigten Fehlerbeispiel folgt der das Ende eines ersten und den Anfang eines nächsten Netzzugriffszyklus definierende, zweite Triggerimpuls T2 zu rasch auf den ersten Triggerimpuls T1, der den Anfang des ersten Netzzugriffszyklus definiert, d.h. der zweite Triggerimpuls T2 liegt unterhalb des unteren Grenzwertes TAₒ und somit außerhalb des Triggerjitter-Toleranzbereichs TA_{b}. Auf die Erkennung dieser Fehlfunktion des das Triggersignal erzeugenden Kommunikationscontrollers 3 hin steuert die Watchdog-Einheit 14 die Treiberfreigabeeinheit 9 dahingehend an, dass das Treiberfreigabesignal 10 temporär auf hohem Signalpegel gehalten wird, so dass der Netzzugriff für den betreffenden Netzknoten zum Senden von Daten temporär gesperrt gehalten wird, wie in Figur 3 durch einen schraffiert markierten Sperrzeitraum symbolisiert. Erst nachdem der Fehler systemintern oder von außen behoben ist, d.h. die Buswächtereinheit 1 wieder ein Triggersignal mit zulässigem Triggerimpulsabstand empfängt und seine Zeitbasis mit derjenigen des Kommunikationscontrollers synchronisiert ist, erzeugt die Buswächtereinheit 1 wieder das Treiberfreigabesignal mit dem vorgegebenen Freigabezeitmuster, so dass der betreffende Netzknoten wieder Sendezugriff auf das Kommunikationsmedium 4 erhält.

Wie aus der obigen Beschreibung eines vorteilhaften Ausführungsbeispiels deutlich wird, erlaubt die erfindungsgemäße Buswächtereinheit einen zuverlässigen, kollisionsfreien und flexiblen Systembetrieb eines zeitgetriggerten Datenkommunikationsnetzes, dessen Netzknoten mit je einer solchen Buswächtereinheit ausgerüstet sind. Es versteht sich, dass neben der gezeigten zahlreiche weitere Realisierungen der Erfindung möglich sind. So kann gegebenenfalls ein anderes Zeitmuster des Treiberfreigabesignals gewählt sein, bis hin zu dem Fall, dass es nur ein einzelnes Zeitfenster zum Senden einer einzelnen Botschaft pro Netzzugriffszyklus beinhaltet. Das jeweils gewünschte Zeitmuster des Treiberfreigabesignals ist frei konfigurierbar und kann in der Buswächtereinheit 1 abgespeichert werden. Durch das Triggersignal werden die Buswächtereinheit von außen zyklisch synchronisiert und deren Watchdog-Einheit zyklisch neu getriggert, wobei alternativ für diese beiden Funktionalitäten zwei getrennte Signale vorgesehen sein können. Eine fehlerhafte Synchronisation der Buswächtereinheit 1 lässt sich selbstständig erkennen und behandeln und führt nicht zu einer Störung der externen Kommunikation, vielmehr wird lediglich der fehlerhafte Netzknoten kommunikationstechnisch passiv geschaltet. Die Buswächtereinheit kann als separate Buswächtereinheit realisiert oder zusammen mit anderen Komponenten oder Funktionen des Systems hard- oder softwaremäßig in eine gemeinsame, umfassendere Einheit integriert sein.

## Patentansprüche

1. Buswächtereinheit für einen Netzknoten eines zeitgetriggerten Datenkommunikationsnetzes, die Mittel (8) zum Empfangen von Triggersignalen zum Triggern von Anfang und Ende eines Netzzugriffszyklus für den zugehörigen Netzknoten umfasst, die Mittel (8, 9) zur Bereitstellung eines Signals zum Freigeben von Sendevorgängen des zugehörigen Netzknotens innerhalb eines jeweiligen Netzzugriffszyklus gemäß eines vorgegebenen Freigabesignalmusters umfasst, die einen Zeitmusterspeicher (11) umfasst, in dem das Freigabesignalmuster abgelegt ist, die eine eigene Zeitbasis (13) umfasst, die getrennt ist von derjenigen des Netzknotens, und aus der ein Taktsignal (15) erzeugt wird, die eine Watchdog-Einheit (14) aufweist, welche den Zeitabstand zwischen je zwei Trigger-Signalen (T1, T2) während einer Zeitdauer (TAᵢ) überwacht, und wobei der Watchdog-Einheit (14) das Taktsignal (15), das Triggersignal (12) und das Freigabesignalmuster zugeführt werden,
**dadurch gekennzeichnet, dass** die Buswächtereinheit (1) den Netzzugriff temporär sperrt, wenn der durch die Watchdog-Einheit (14) festgestellte Zeitabstand kleiner als ein vorgebbarer unterer Grenzwert (TAᵤ) oder größer als ein vorgebbarer oberer Grenzwert (TAₒ) ist.

2. Buswächtereinheit nach Anspruch 1, **dadurch gekennzeichnet, dass** das Triggersignal gleichzeitig als Synchronisationssignal zum Synchronisieren der eigenen Zeitbasis der Buswächtereinheit (1) mit der Zeitbasis fungiert, auf der das Triggersignal basiert.

3. Buswächtereinheit nach Anspruch 1 oder 2, **dadurch gekennzeichnet, dass** das Freigabesignalmuster pro Netzzugriffszyklus mehrere separate Einzelnutzungs-Freigabetakte (Z1, Z2), deren Länge jeweils derjenigen eines einzelnen Netzknoten-Sendevorgangs entspricht, und/oder wenigstens einen Mehrfachnutzungs-Freigabetakt (Z3) mit einer Länge beinhaltet, die ein Mehrfaches der Länge eines einzelnen Netzknotens beträgt.

4. Buswächtereinheit nach einem der Ansprüche 1 bis 3, **dadurch gekennzeichnet, dass** eine Diagnoseeinheit (17) zur Diagnose einer oder mehrerer Komponenten der Buswächtereinheit (1) und/oder zur Diagnose der fehlerfreien Verarbeitung des Freigabemusters durch eine von diesem gesteuerte Sendetreibereinheit (7).

5. Buswächtereinheit nach einem der Ansprüche 1 bis 4, **dadurch gekennzeichnet, dass** eine Zugriffsabsicherungseinheit (16), welche einzulesende Betriebsparameterdaten gemäß vorgebbarer Plausibilitätskriterien und/oder einem vorgebbaren Übertragungssicherungsverfahren auf Plausibilität und/oder Korrektheit prüft.

## Claims

1. Bus controller unit for a network node of a time-triggered data communication network, which comprises means (8) for the reception of trigger signals to trigger the start and the end of a network access cycle for the associated network node, which comprises means (8, 9) for the provision of a signal for enabling transmission processes of the associated network node within each network access cycle in accordance with a predetermined enable signal pattern, which comprises a time pattern memory (11) in which the enable signal pattern is stored, which comprises a time base (13) which is separate from that of the network node and from which a clock signal (15) is generated, and which incorporates a watchdog unit (14) monitoring the time interval between two trigger signals (T1, T2) during a time period (TAᵢ), the clock signal (15), the trigger signal (12) and the enable signal pattern being fed to the watchdog unit (14),
**characterised in that** the bus controller unit (1) inhibits network access if the time interval detected by the watchdog unit (14) is shorter than a presettable lower limit value (TAᵤ) or longer than a presettable upper limit value (TAₒ).

2. Bus controller unit according to claim 1, **characterised in that** the trigger signal simultaneously acts as a synchronising signal for the synchronisation of the own time base of the bus controller unit (1) with the time base on which the trigger signal is based.

3. Bus controller unit according to claim 1 or 2, **characterised in that** the enable signal pattern in each network access cycle includes a plurality of separate single-use enable pulses (Z1, Z2), the length of each corresponding to that of an individual network node transmission process, and/or at least one multiple-use enable pulse (Z3) with a length which is a multiple of the length of an individual network node.

4. Bus controller unit according to any of claims 1 to 3, **characterised in that** a diagnostic unit (17) is provided for the diagnosis of one or more components of the bus controller unit (1) and/or for the diagnosis of the error-free processing of the enable pattern by a transmitter driver unit (6) controlled thereby.

5. Bus controller unit according to any of claims 1 to 4, **characterised in that** an access protection unit (16) is provided, which checks operating parameter data to be read in using presettable plausibility criteria and/or using a presettable transmission protection procedure for plausibility and/or correctness.

## Revendications

1. Unité de surveillance de bus pour un noeud de réseau d'un réseau de communication de données à déclenchement temporel, qui comprend des moyens (8) de réception de signaux de déclenchement pour déclencher un début et une fin d'un cycle d'accès au réseau pour le noeud de réseau correspondant, qui comprend des moyens (8, 9) destinés à produire, pendant un cycle d'accès au réseau correspondant, un signal de validation des opérations d'émission du noeud de réseau correspondant selon un modèle de signal de validation prédéfini, qui comprend une mémoire de schéma temporel (11), dans laquelle le modèle de signal de validation est mémorisé, qui comprend une base de temps (13) propre qui est distincte de celle du noeud de réseau, et à partir de laquelle est généré un signal d'horloge (15), qui présente une unité de surveillance (14), laquelle surveille l'intervalle de temps entre deux signaux de déclenchement (T1, T2) pendant une durée (TAᵢ), et le signal d'horloge (15), le signal de déclenchement (12) et le modèle de signal de validation étant envoyés à l'unité de surveillance, **caractérisée en ce que** l'unité de surveillance de bus (1) bloque temporairement l'accès au réseau lorsque l'intervalle de temps détecté par l'unité de surveillance (14) est inférieur à une valeur limite inférieure prédéfinie (TAᵤ) ou supérieure à une valeur limite supérieure prédéfinie (TAₒ).

2. Unité de surveillance de bus selon la revendication 1, **caractérisée en ce que** le signal de déclenchement sert simultanément de signal de synchronisation pour synchroniser la base de temps propre de l'unité de surveillance de bus (1) avec la base de temps sur laquelle le signal de déclenchement se base.

3. Unité de surveillance de bus selon la revendication 1 ou 2, **caractérisée en ce que** le modèle de signal de validation contient, par cycle d'accès au réseau, plusieurs horloges de validation distinctes à utilisation unique (21, 22), dont la durée correspond à celle d'une opération d'émission de noeud de réseau individuel, et/ou au moins une horloge de validation à utilisations multiples (Z3) présentant une durée qui correspond à un multiple de la durée d'un noeud de réseau individuel.

4. Unité de surveillance de bus selon l'une quelconque des revendications 1 à 3, **caractérisée par** une unité de diagnostic (17) prévue pour diagnostiquer un ou plusieurs composants de l'unité de surveillance de bus (1) et/ou pour diagnostiquer le traitement correct du modèle de validation par une unité de pilote d'émission (7) commandée par celui-ci.

5. Unité de surveillance de bus selon l'une quelconque des revendications 1 à 4, **caractérisée par** une unité de protection d'accès (16), qui vérifie la plausibilité et/ou l'exactitude des données de paramètres de fonctionnement à lire selon des critères de plausibilité prédéfinis et/ou un procédé de sécurisation de transmission prédéfini.
